# EUROPEAN PATENT APPLICATION

(11) **EP 2 472 878 A1**
(43) Date of publication of application: **04.07.2012**
(21) Application number: 10016231.2
(22) Date of filing: 31.12.2010
(51) Int. Cl.: H04N 13/00

(54) **Method and apparatus for combining images of a graphic user interface with a stereoscopic video**

(71) Applicant: Advanced Digital Broadcast S.A., 1292 Chambesy (CH)
(72) Inventor: Lazarski, Wojciech, 65-119 Zielona Góra (PL); Szajna, Tomasz, 65-119 Zielona Góra (PL)
(74) Representative: Di Bernardo, Antonio

(57) **Abstract**

The present invention relates to a method for combining images of a graphic user interface with a stereoscopic video content. The latter comprises at least a pair of video images intended respectively for a right and a left eye, while the graphic user interface comprises at least a pair of graphic images. The method comprises the steps of generating combined video images by blending each video image of said pair of video images with a respective graphic image of said pair of graphic images, so that the each combined video image comprises a first region (1100) comprising only pixels from the video image and a second region (1200) wherein the blended video image appears in transparency behind the blended graphic image with a transparency that decreases according to a monotone law moving away from the first region (1100).

A video processing unit adapted to implement the method is also disclosed.

## Description

### Technical Field

The present invention relates to image processing, and in particular to a system and a method for combining graphics with three dimensional contents.

### Background art

Video systems, like TV sets, set-top-boxes and the like, are commonly provided with a processor that combines video and graphics in order to display simultaneously a video content and a graphical user interface (GUI).

As an example, a banner can be displayed on the bottom of a screen to provide information on TV programs currently viewed or scheduled for broadcasting.

While overlapping of GUI and video contents is quite easy and well known in the field of 2D video processing, when three dimensional contents are displayed, several problems arise for displaying the GUI.

EP 1187495 discloses that displaying apparatuses are known which provide stereo vision on a portion in which stereo data is to be displayed, and provide GUI representation, which has no parallax and does not support stereo vision, on a portion in which the stereo vision data is not to be displayed, such as a GUI portion. EP 1987495 discloses therefore a stereoscopic image display apparatus including a data display region on which stereo image data is displayed, and a user interface region on which a plurality of icon images are displayed to control a user interface. An operating unit is operated to allow the icon images to be stereoscopically viewed by both eyes.

Separating 3D video images and GUI in two different regions of the screen does not offer a good video experience.

US 2010/0208040 faces the problem of combining user interface and 3D video contents. The solution proposed requires analyzing the depth of 3D video and UI content and to transform the perceived depth of one of the two contents by compressing the perceived depth of at least one of them, so that the UI is perceived by the viewer in a position that is in front of the 3D content.

This solution appears to be very complex and requires a big computational effort of the video processor in charge of mixing UI and 3D video content.

It is therefore felt the need for a method and a system for optimizing combination of a GUI and a 3D video content. The GUI may itself be 3D.

### Summary of the invention

It is an object of the present invention, to provide a system and a method for combining a GUI and a stereoscopic video content, which overcomes some of the problems of the prior art.

In particular, it is an object of the present invention to present a method and a system for combining a GUI and a 3D video content in a way which provides good viewing experience without increasing too much computational power requirements for the video processor.

According to one aspect, the invention is directed to a method for combining images of a graphic user interface with a stereoscopic video content. The latter comprises at least a pair of video images intended respectively for a right and a left eye, while the graphic user interface comprises at least a pair of graphic images. The method comprises the steps of generating combined video images by blending each video image of said pair of video images with a respective graphic image of said pair of graphic images, so that the each combined video image comprises a first region comprising only pixels from the video image and a second region wherein the blended video image appears in transparency behind the blended graphic image with a transparency that decreases according to a monotone law moving away from the first region.

This solution offers the advantage that the GUI is easily combined with the stereoscopic video image. Moreover, the blending provides the effect that the GUI is perceived as being in front of the lower portion of the stereoscopic video. This effect is therefore obtained without complicate calculation of the depth matrix of the stereoscopic video image.

According to one aspect, transparency decreases until a third region wherein the combined image comprises only pixels of the blended graphic image. This solution provides a more stable impression of the GUI and therefore a better viewing experience for the user.

In one aspect, the third region is used for displaying information associated to the stereoscopic video. In this way textual information appear to be stable and the user is not annoyed by movement of the 3D video while reading the information.

In a preferred embodiment, the blended graphic image comprises a coloured banner having a colour gradient whose opacity decreases moving away from the first region, i.e. from the moving 3D video. This solution has the effect that the GUI seems to have a shadow that covers the 3D video content and therefore GUI is perceived as being in front of the video.

In one aspect, the gradient is a separate graphical item. The graphic image is therefore blended with the video image and with this separate graphical item, whereby blending is obtained considering the graphic image as the upper layer, the separate graphical item as the intermediate layer and the video image as the lower layer.

In another aspect, minimum opacity and/or gradient hardness is set by the user, so as to improve viewing experience.

In another aspect, the gradient minimum opacity depends on configuration and/or components of the graphical user interface.

In another aspect, the GUI can be a 2D or 3D GUI, therefore the pair of graphic images combined to a corresponding pair of left and right video images, can be respectively identical or different.

In another aspect, the invention is directed also to a video processing device comprising a memory unit storing at least a pair of graphic images of a graphical user interface. The video processing unit also comprises a video unit for processing a stereoscopic video content and for selecting a pair of video images intended respectively for a right and a left eye. The video processing unit also comprises a combining unit operatively connected to the storing unit and to the video unit for combining a video image of said pair of video images with a graphic image of said pair of graphic images. The video unit is adapted to generate combined video images by blending each video image of said pair of video images with a respective graphic image of said pair of graphic images, so that the each combined video image comprises a first region comprising only pixels from the video image and a second region wherein the blended video image appears in transparency behind the blended graphic image with a transparency that decreases according to a monotone law moving away from the first region.

In another aspect, the invention is directed to a computer program comprising program code means for performing all the steps of the method described above (and in the following detailed description) when said program is run on a computer.

In another aspect, the invention is directed to a computer readable medium storing computer-executable instructions performing all the steps of the method described above (and in the following detailed description) when executed on a computer.

### Brief description of the drawings

Further features and advantages of the present invention will become apparent from the detailed description of preferred, non-exclusive embodiments of methods and systems for combining GUI and stereoscopic video according to the invention, which are described as non-limiting examples with the help of the annexed drawings, wherein:
- Figure 1 illustrates a video system according to an embodiment of the present invention;
- Figure 2 illustrates a block scheme of a set-top-box of the video system of figure 1;
- Figure 3 schematically illustrates position of objects perceived by a user of video system 1 when watching a stereoscopic video;
- Figure 4 illustrates a flow chart of a method for combining graphics and stereoscopic video according to the invention;
- Figures 5, 6 and 7 illustrate images obtained by combining graphics and stereoscopic video according to different embodiments of the present invention.

### Detailed description of embodiments

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all modifications, alternative constructions, and equivalents falling within the spirit and scope of the invention as defined in the claims.

In the following description and in the figures, like elements are identified with like reference numerals. The use of "e.g.," "etc," and "or" indicates non-exclusive alternatives without limitation unless otherwise noted. The use of "including" means "including, but not limited to," unless otherwise noted.

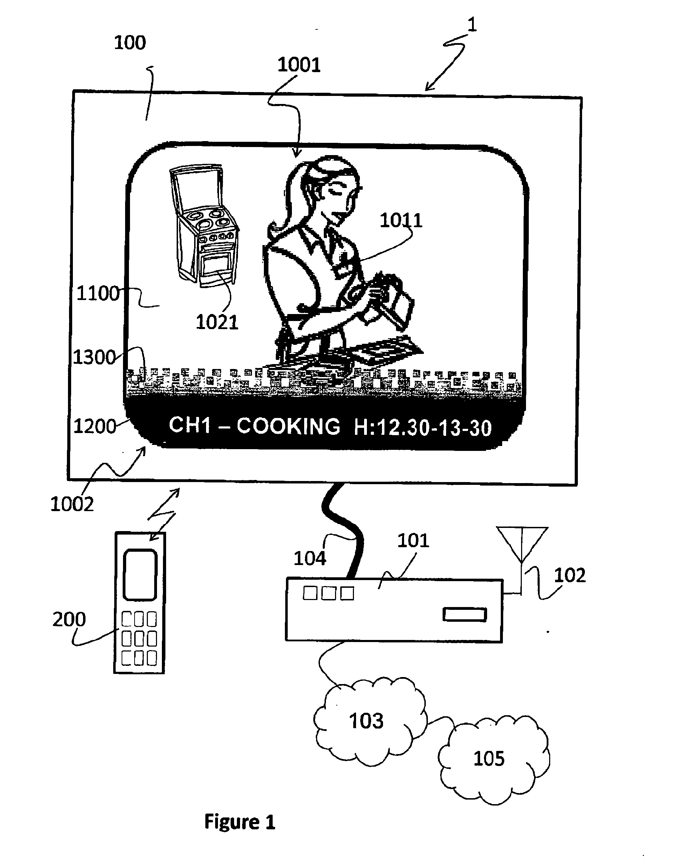

In Figure 1, disclosed is a video system 1 that allows a user to view video contents, in particular stereoscopic video contents.

The video system comprises a video processing device that processes the stereoscopic video contents and combines them with images of a GUI in order to allow a viewer of the video contents to interact with the video system while viewing the stereoscopic video content displayed by a display device receiving the video stream generated by the processing device.

In particular embodiment of figure 1, video system 1 comprises a TV set 100 connected to a video processing unit that provide TV set 100 with stereoscopic contents.

In the following non limitative examples, the video processing unit is a set-top-box 101 connected via a video link 104 to the TV set 100; the video link can be an RF (Radio Frequency) video link, an S-Video, Composite Video, or other form of video link. In further embodiments, video unit 101 can be a DVD reader, PC or a Blu-RAY reader or a tape reader that reads a video content from a support (optical or magnetic or mass memory) and provides the TV set with a video content over the video link 104. More in general, video processing unit 101 is a unit that provides 3D video signal to TV set 100 over video link 104. In a further embodiment, video processing unit is integrated in TV set 100 or (more in general) in a display device.

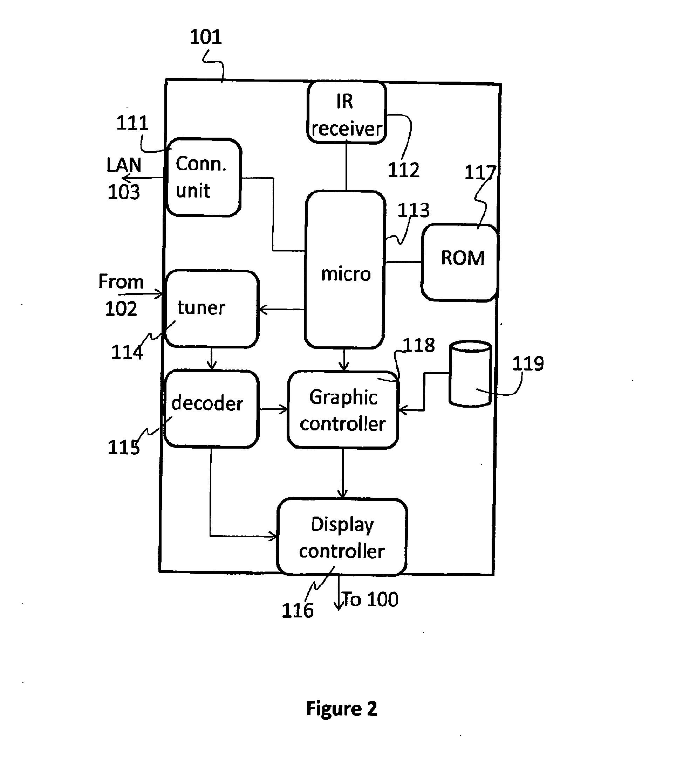

Coming back to the embodiment of figure 1, set-top-box 101 receives broadcast TV signals, decodes them and provides output video signals to the TV set 100 over the above mentioned video link; in this way a user can watch on TV set 100 TV programs transmitted by the satellite or cable operators and received by set-top-box 101. In order to implement the above actions, in the embodiment of figures 1 and 2 set top box 101 comprises input means 114 (in particular a tuner) connected to an antenna 102 which receives terrestrial signals. In case the set-top-box is configured to receive cable signals, tuner 114 will be connected to the cable via a dedicated connector.

Tuner 114 is controlled by microcontroller 113 in order to tune on the desired TV channel, which is output to a decoder 115 that decodes it and provides it to the display controller 116 which provides video output signals over the video link 104 connecting set-top-box 101 and TV set 100.

In the embodiment of figures 1 and 2, set top box 101 is also provided with a data connection unit 111 for connection to the Internet 105 so as to receive IPTV, i.e. TV over IP protocol. In the embodiment of figures 1 and 2, data connection unit is an Ethernet card for connection to an Ethernet local network 103, e.g. a LAN (Local Area network). Set-top-box 101 therefore connects to a web server providing IPTV via a gateway (not shown in figure 1) connected to the local network.

Data connection unit 101, under the control of microcontroller 113, provides data to decoder 115, which is therefore a multistandard decoder suitable to decode both OFDM modulated signals (like DVB signals) and IPTV digital signals. Alternatively a separate decoder can be provided for decoding IPTV signals and provide the decoded signals to the display controller 116.

In alternative embodiments of the present invention, TV set 100 can be replaced by any device suitable to display video signals received by a video unit, e.g. a video projector or a computer monitor.

Microcontroller 113 controls tuner 114 according to user commands received via an infrared receiver 112 in wireless communication with a remote control 200 operated by the user of video system 1.

In order to improve easiness of use of the video system, set-top-box 101 is provided with an interactive GUI. A memory area, in particular a ROM 117, stores code portions that, once run by microcontroller 113, implement the interactive GUI which allows human-machine interaction between user and STB 101 or the video system 1 in general. Code portions suitable to implement the GUI according to the invention can be stored on different computer readable medium that can be accessed and read by microcontroller 113, e.g. by means of a corresponding reading unit operatively connected to the microcontroller.

In order to allow the user to select between different control options for controlling video system 1, or in order to display useful information, like electronic program guide (EPG) or information banners providing information on a current TV program, microcontroller 113 controls graphic controller 118 in order to generate text and graphics to be provided to the display controller 116.

Display controller 116 mixes texts and graphics output from graphic controller 118 with the video output from video decoder 115. The signal generated by display controller 116 is then provided to the TV set via video link 104. TV set 100 therefore will display the TV program 1001 and several graphics 1002. Graphics 1002 can be locally generated by the video unit or can be received as metadata embedded in a received video signal; for this reason decoder 115 is operatively connected to graphic controller 118.

In figure 1, a banner 1002 is presented which provides information on the channel cun-ently viewed (CH1), on the title of the program on air ("Cooking") and the scheduling time (12.30-13:30).

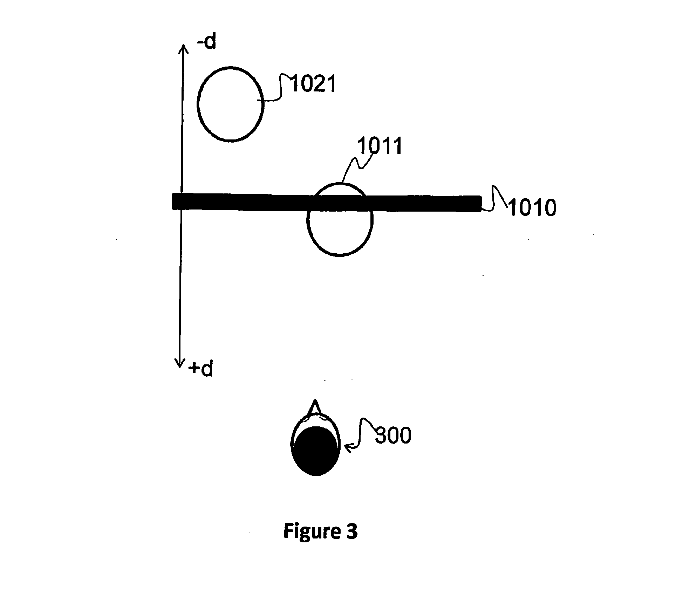

In this embodiment, TV program 1001 is a 3D video content and therefore in the same scene there are displayed several objects which are perceived by the user at different depths. As better shown with the help of figures 1 and 3, video content 1001 comprises a woman 1011 and a stove 1021. Video content 1001 is composed of a left and a right image that, opportunely displayed, generates in user 300 the impression that woman 1011 is partially coming out (space +d) from the screen 1010, while stove 1021 is behind (space -d) the perceived plane of the screen 1010. Different objects therefore are perceived as having different depths (+d, -d) with respect of the plane of the screen.

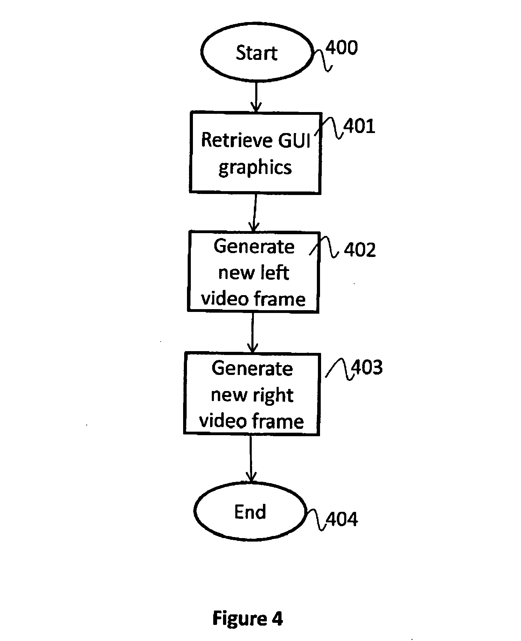

In one embodiment, set-top-box 101 generates graphics of the GUI and combines them with 3D video contents according to the method hereby described with reference to figure 4.

The method for combining graphics with 3D video contents starts at step 400, when in response to a user command given by a user by means of remote control 200, microcontroller 113 generates graphics to be displayed with the stereoscopic video content.

Microcontroller 113 interprets the command received by the user and controls the graphic controller 118 to generate the graphic of the UI to be displayed in response to the user command.

Graphic controller retrieves from a memory area 119 (step 401) graphics to be displayed. In the preferred embodiment memory area 119 stores 3D graphic images (i.e. pairs of right and left graphic images that can be displayed so as to be perceived as a 3D content) to be displayed. In another embodiment, memory area 119 stores only 2D images; in this embodiment microcontroller processes this 2D image and generates a 3D image by creating a second image so as to have a pair of left and right graphic images.

Images generated by graphic controller 118 are provided to the display controller that combines them with frames of the video stream to be displayed.

In the preferred embodiment, graphics selected from memory area 119 are smaller compared to images transported by each frame of the video stream to be displayed. More preferably, graphics stored in memory area 119 are rectangular horizontal slices of a video frame. More particularly, these slices have a vertical size which range from 12% to 25% of the vertical size of a video frame; e.g. if a video frame is a 1920x1080 HD frame, graphics stored in memory area 119 have preferably a size ranging from 1920x162 to 1920x270 pixels.

In one embodiment, display controller 116 receives as input from decoder 115 a left and a right image corresponding to a stereoscopic pair that, opportunely displayed, produces in the viewer (eventually provided with shutter glasses or polarized glasses) perception of a 3D image.

In this embodiment, graphic controller 118 also provides to display controller 116 a pair of left and right graphic images to be combined respectively with the left and right video image of the decoded stereoscopic video content.

For each of left and right image, display controller combines the corresponding left or right graphic image selected from memory area 119.

Display controller 116, therefore starts selecting a left video image of the 3D video frame and a corresponding left graphic image (step 402).

Display controller 116 generates a combined left video image (step 402) by blending the left video image with the respective left graphic image, so that the combined video image comprises a first region (1100) comprising only pixels from the video image and a second region (1200) wherein the blended video image appears in transparency behind the blended graphic image with a transparency that decreases according to a monotone law moving away from the first region (1100).

Blending of images can be obtained via any known blending techniques, like the well known alpha-blending. As it is known, these techniques allows blending two images so that the matrix of pixels composing the combined image provides in the viewer the impression that the two images are placed on different overlapping layers with a degree of opacity/transparency that can be opportunely selected.

In the embodiment of figure 1, the video and graphic images are blended in such a way that transparency slowly reduces to zero so that the combined video image comprises three regions:
- A first region 1100, positioned in the upper part of the combined image, wherein the combined left video image comprises only pixels from the left video image of the stereoscopic video;
- A second region 1200, positioned in the lower part of the combined video image, wherein the combined left video image comprises only pixels from the left graphic image; and
- An intermediate region 1300, placed between regions 1100 and 1200, wherein the lines of the combined left video image comprise pixels whose colours (RGB plus alfa value) depends on pixels of the left graphic image and pixels of the left video image of the decoded stereoscopic video.

The result of this combination is a video frame, wherein the 3D video content is displayed in the upper portion and fades in the graphic placed in the bottom of the video frame. The effect is a stable GUI placed on the bottom of the video frame.

In the preferred embodiment, the graphic image of the GUI comprises a coloured banner having a colour gradient; in the embodiment of figure 1 the gradient has greater transparency at the top and lower transparency at the bottom, yet in an alternative and preferred embodiment, the gradient increases opacity in the direction towards the centre of the displayed image, so as to provide the impression that the shadow of the GUI covers the video stereoscopic content. In other words, it is a preferred solution to increase the colour gradient in the direction moving from the region comprising only pixels of the GUI toward the region comprising only pixels of the stereoscopic video content.

The gradient may be a separate graphical item on an On Screen Display (OSD) single layer or may be a separate OSD layer while the GUI itself is drawn on a further OSD layer in front of the gradient OSD layer.

The minimum opacity may be predefined or left to be chosen by the viewer. Some viewers may prefer less opaque gradient's at the edge of the displayed pictures. Further the gradient minimum opacity may depend on particular GUI configuration and components. Gradients types may also be configurable such as gradients hardness.

Once combined left video image has been generated, display controller stores it in a memory buffer and generates (step 403) a combined right video image by combining right image of the decoded stereoscopic video content and right graphic image as above described for the combined left video image.

New combined left and right video images are then output to the video link 104 so as to be received and displayed by TV set 100. Depending on the type of video link and/or on the features of TV set 100, combined left and right images can be transmitted as separate frames or can be combined in a composite video frame, e.g. in a well known top-bottom or in a side-by-side format. The way combined left and right images are output from video unit 101 is not limitative of the present invention.

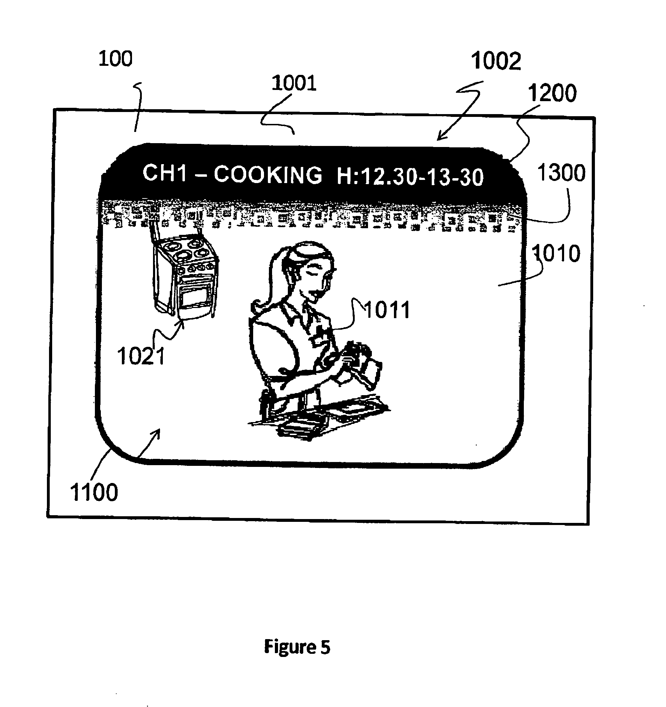

In the embodiment of figure 5, a banner 1002 is placed in the top portion of the video frame displayed. In this case, the position of first and second region described with reference to figure 1 and 4, is inverted: the region comprising only pixels from the graphic image is placed in the top of the frame to be displayed, while the region comprising only pixels from the stereoscopic video is placed in the bottom of the video frame.

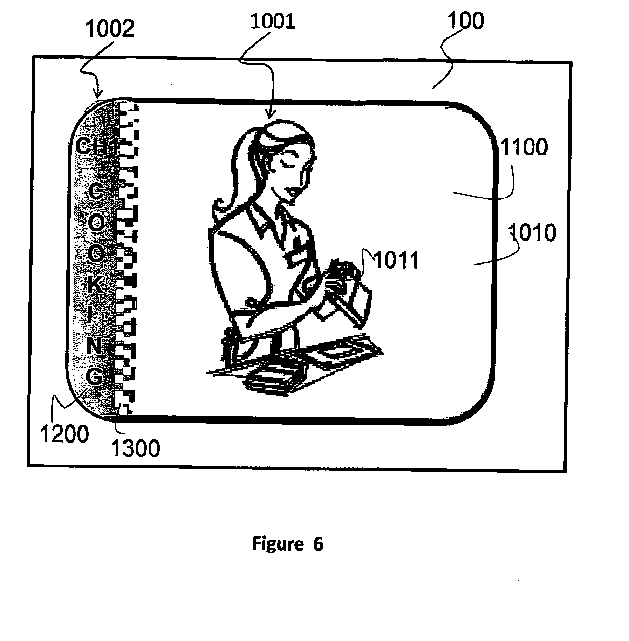

In the embodiment of figure 6, the banner is a vertical banner placed on the left side of the frame. In this embodiment, the intermediate region comprising pixels from both stereoscopic video and graphics of the GUI is a vertical slice comprising a plurality of adjacent columns wherein pixels from 3D video and from graphics are mixed, in particularly are alternated.

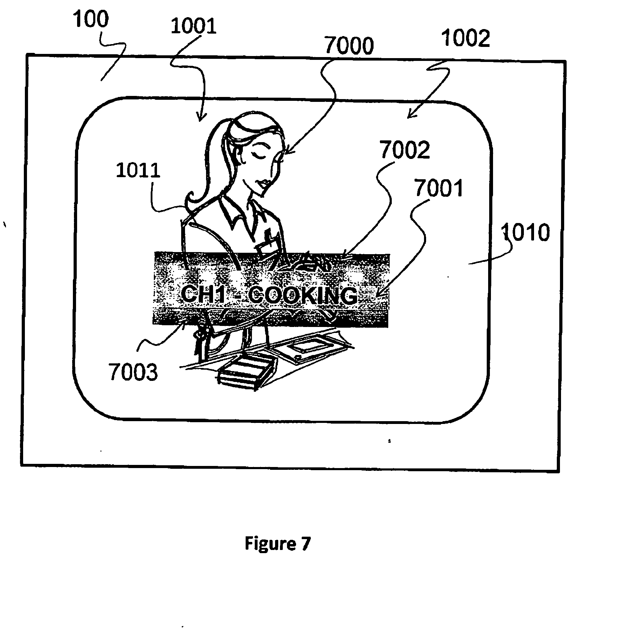

In the embodiment of figure 7, graphics of the UI are combined with the stereoscopic video frame so as to be displayed in the middle of the screen. In this embodiment, four regions can be individuated:
- A first region 7000 comprising only pixels of the stereoscopic video content:
- A second region 7001 comprising only pixels of the graphics selected from memory area 119;
- A third region 7002 and a fourth region 7003 comprising pixels obtained by blending of the graphic images selected from memory area 119 and pixels from the stereoscopic video received from decoder 115. Regions 7002 and 7003 are placed at two opposite sides of region 7001.

In the embodiment of figure 7, regions 7002 and 7003 have a colour gradient increasing in the vertical direction, so as to shadow the stereoscopic video content.

In a further embodiment, not illustrated in the figures, the graphics are combined to the stereoscopic video, so as that a region comprising all pixels of the graphic selected from memory area 119 is surrounded by a region comprising pixels of both graphics and stereoscopic video received from decoder 115. The shape of these surrounding regions, as well as the shape of the region comprising all pixels of the graphic images, can be of different form, e.g. circular, elliptical, trapezoidal, etc...

In the embodiment of figure 7, the regions comprising pixels from graphic images and pixels from the stereoscopic video, is more uniform and the stereoscopic video appears to be in transparency. The effect is due to a different selection of pixels from the images that, in case of figure 7, is adapted to generate a transparency effect. This transparency effect can be also obtained in case of figures 4, 5 and 6.

The purpose of the Abstract is to enable the public, and especially the scientists, engineers, and practitioners in the art who are not familiar with patent or legal terms or phraseology, to determine quickly from a cursory inspection, the nature and essence of the technical disclosure of the application. The Abstract is neither intended to define the invention of the application, which is measured by the claims, nor is it intended to be limiting as to the scope of the invention in any way.

Still other features and advantages of the claimed invention will become readily apparent to those skilled in this art from the above detailed description describing preferred embodiments of the invention, simply by way of illustration of the best mode contemplated by carrying out the invention. As will be realized, the invention is capable of modification in various obvious respects all without departing from the invention. Accordingly, the drawings and description of the preferred embodiments are to be regarded as illustrative in nature, and not as restrictive in nature.

While there is shown and described the present preferred embodiment of the invention, it is to be distinctly understood that this invention is not limited thereto, but may be variously embodied to practice within the scope of the following claims. From the foregoing description, it will be apparent that various changes may be made without departing from the spirit and scope of the invention as defined by the following claims.

In particular, those skilled in the art will readily realize that while the invention has been described with reference to a set-top-box, the method for combining graphics and stereoscopic video contents can be applied to different apparatuses, like optical discs readers, tape readers, computer devices, and so on.

In general, the invention is therefore directed to any video processing device comprising a memory unit storing at least a pair of graphic images of a graphical user interface. The video processing unit also comprises a video unit for processing a stereoscopic video content and for selecting a pair of video images intended respectively for a right and a left eye. The video processing unit also comprises a combining unit operatively connected to the storing unit and to the video unit for combining a video image of said pair of video images with a graphic image of said pair of graphic images. The video unit is adapted to generate combined video images by blending each video image of said pair of video images with a respective graphic image of said pair of graphic images, so that the each combined video image comprises a first region comprising only pixels from the video image and a second region wherein the blended video image appears in transparency behind the blended graphic image with a transparency that decreases according to a monotone law moving away from the first region.

More in general, the invention is directed to any video processing device that is configured to implement the methods for combining GUI and 3D videos above described and as defined by the annexed claimed.

In the same way, those skilled in the art will readily realize that while the invention has been described with reference to particular block schemes, those blocks can be in different way combines, integrated or connected in order to implement the same functions and features clearly derivable from the above description. As a consequence, also the functions and method steps above described with reference to figure 4 and to the preferred embodiment of a set-top-box 101, can be implemented by different devices.

Those skilled in the art will also understand that, while the algorithms for implementing the method of combining stereoscopic video and graphics have been disclosed as being stored in a memory area 117 of set-top-box 101, the same algorithms can be stored in any other computer readable medium. The invention is therefore directed not only to a video processing device or a video system or a method as above described, but shall also be directed to a computer program comprising code portions for performing all the steps of the method according to the features above described when said program is run on a computer. The invention is also directed to a computer readable medium (like a Blu-Ray, DVD, Video Disc, etc...) storing computer-executable instructions performing all the steps of the method above described when executed on a computer.

## Claims

1. Method for combining images of a graphic user interface with a stereoscopic video content, wherein said stereoscopic video content comprises at least a pair of video images intended respectively for a right and a left eye, and wherein said graphic user interface comprises at least a pair of graphic images, the method being **characterized by** comprising the steps of generating combined video images by blending each video image of said pair of video images with a respective graphic image of said pair of graphic images, so that the each combined video image comprises a first region (1100) comprising only pixels from the video image and a second region (1200) wherein the blended video image appears in transparency behind the blended graphic image with a transparency that decreases according to a monotone law moving away from the first region (1100).

2. Method according to claims 1, wherein said transparency decreases until a third region wherein said combined image comprises only pixels of the blended graphic image.

3. Method according to claim 2, wherein said third region comprises information associated to the stereoscopic video.

4. Method according to any of the previous claims, wherein the blended graphic image comprise a coloured banner having a colour gradient.

5. Method according to claim 4, wherein the gradient decreases opacity moving away from the first region.

6. Method according to claim 4 or 5, wherein the gradient is a separate graphical item and wherein said graphic image is blended with said video image and with said separate graphical item, whereby blending is obtained considering the graphic image as the upper layer, the separate graphical item as the intermediate layer and the video image as the lower layer.

7. Method according to claim 4 or 5 or 6, wherein minimum opacity is set by a user.

8. Method according to claim 7, wherein said user sets gradients hardness.

9. Method according to claim 6, wherein the gradient minimum opacity depends on configuration and/or components of the graphical user interface.

10. Method according to any of the previous claims, wherein said graphic images of said pair are identical.

11. Video processing device, comprising a memory unit (119) storing at least a pair of graphic images of a graphical user interface, a video unit (115) for processing a stereoscopic video content and for selecting a pair of video images intended respectively for a right and a left eye, a combining unit (116) operatively connected to said storing unit (119) and to said video unit (115) for combining a video image of said pair of video images with a graphic image of said pair of graphic images, **characterized in that** said video unit (115) is adapted to generate combined video images by blending each video image of said pair of video images with a respective graphic image of said pair of graphic images, so that the each combined video image comprises a first region (1100) comprising only pixels from the video image and a second region (1200) wherein the blended video image appears in transparency behind the blended graphic image with a transparency that decreases according to a monotone law moving away from the first region (1100).

12. Video processing device, further comprising a receiver (112) operatively connected to said video unit (116) for receiving user inputs for controlling blending of said video image and of the graphic image.

13. Video processing device, wherein said video unit (115) is adapted to implement a method according to any of claims 1 to 10.

14. A computer program comprising program code means for performing all the steps of the method according to any of claims 1-10 when said program is run on a computer.

15. A computer readable medium storing computer-executable instructions performing all the steps of the method according to any of claims 1-10 when executed on a computer.

## Amended claims

### Amended claims in accordance with Rule 137(2) EPC.

**1.** Method for combining images of a graphic user interface with a stereoscopic video content, wherein said stereoscopic video content comprises at least a pair of video images intended respectively for a right and a left eye, and wherein said graphic user interface comprises at least a pair of graphic images, the method comprising the steps of generating combined video images by blending each video image of said pair of video images with a respective graphic image of said pair of graphic images, so that the each combined video image comprises a first region (1100) comprising only pixels from the video image and a second region (1200) wherein the blended video image appears in transparency behind the blended graphic image, the method being **characterized in that** said blended video image appears with a transparency that decreases according to a monotone law moving away from the first region (1100).

**2.** Method according to claim 1, wherein said transparency decreases until a third region wherein said combined image comprises only pixels of the blended graphic image.

**3.** Method according to claim 2, wherein said third region comprises information associated to the stereoscopic video.

**4.** Method according to any of the previous claims, wherein the blended graphic image comprise a coloured banner having a colour gradient.

**5.** Method according to claim 4, wherein the gradient decreases opacity moving away from the first region.

**6.** Method according to claim 4 or 5, wherein the gradient is a separate graphical item and wherein said graphic image is blended with said video image and with said separate graphical item, whereby blending is obtained considering the graphic image as the upper layer, the separate graphical item as the intermediate layer and the video image as the lower layer.

**7.** Method according to claim 4 or 5 or 6, wherein minimum opacity is set by a user.

**8.** Method according to claim 7, wherein said user sets gradients hardness.

**9.** Method according to claim 6, wherein the gradient minimum opacity depends on configuration and/or components of the graphical user interface.

**10.** Method according to any of the previous claims, wherein said graphic images of said pair are identical.

**11.** Video processing device, comprising a memory unit (119) storing at least a pair of graphic images of a graphical user interface, a video unit (115) for processing a stereoscopic video content and for selecting a pair of video images intended respectively for a right and a left eye, a combining unit (116) operatively connected to said storing unit (119) and to said video unit (115) for combining a video image of said pair of video images with a graphic image of said pair of graphic images, **characterized in that** said video unit (115) is adapted to generate combined video images by blending each video image of said pair of video images with a respective graphic image of said pair of graphic images, so that the each combined video image comprises a first region (1100) comprising only pixels from the video image and a second region (1200) wherein the blended video image appears in transparency behind the blended graphic image with a transparency that decreases according to a monotone law moving away from the first region (1100).

**12.** Video processing device according to claim 11, further comprising a receiver (112) operatively connected to said video unit (116) for receiving user inputs for controlling blending of said video image and of the graphic image.

**13.** Video processing device according to any one of claims 11 or 12, wherein said video unit (115) is adapted to implement a method according to any of claims 1 to 10.

**14.** A computer program comprising program code means for performing all the steps of the method according to any of claims 1 to 10 when said program is run on a computer.

**15.** A computer readable medium storing computer-executable instructions performing all the steps of the method according to any of claims 1 to 10 when executed on a computer.
